(19) Europäisches Patentamt / European Patent Office / Office européen des brevets

(11) **EP 3 305 843 B1**

(12) **EUROPEAN PATENT SPECIFICATION**

(45) Date of publication and mention
of the grant of the patent:
**15.01.2020 Bulletin 2020/03**

(21) Application number: **16830491.3**

(22) Date of filing: **25.07.2016**

(51) Int Cl.:
*C08L 21/00* (2006.01)     *B29C 33/02* (2006.01)
*B60C 5/14* (2006.01)     *C08K 3/04* (2006.01)
*C08K 3/22* (2006.01)     *C08L 23/22* (2006.01)
*C08L 23/28* (2006.01)     *C08L 45/00* (2006.01)
*C08L 7/00* (2006.01)     *C08L 9/00* (2006.01)
*C08L 61/04* (2006.01)     *C08L 91/00* (2006.01)
*B60C 1/00* (2006.01)     *B29D 30/06* (2006.01)
*C08L 15/02* (2006.01)

(86) International application number:
**PCT/JP2016/071750**

(87) International publication number:
**WO 2017/018386 (02.02.2017 Gazette 2017/05)**

(54) **RUBBER COMPOSITION**

KAUTSCHUKZUSAMMENSETZUNG

COMPOSITION DE CAOUTCHOUC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.07.2015 JP 2015151210**

(43) Date of publication of application:
**11.04.2018 Bulletin 2018/15**

(73) Proprietor: **Sumitomo Rubber Industries, Ltd.
Kobe-shi, Hyogo 651-0072 (JP)**

(72) Inventor: **MIYAZAKI, Tatsuya
Kobe-shi
Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
WO-A2-2006/047509     JP-A- 2004 224 963
JP-A- 2010 006 133     JP-A- 2011 088 988
JP-A- 2011 088 998     JP-A- 2011 144 326
JP-A- 2011 174 027     JP-A- 2011 178 820
JP-A- 2014 531 997     JP-A- 2015 093 928
JP-A- 2015 501 359

**Description**

TECHNICAL FIELD

The present invention relates to a rubber composition, a tire having an inner liner composed of the rubber composition, and a bladder for vulcanization of a tire composed of the rubber composition.

BACKGROUND OF THE INVENTION

In recent years, a rubber composition for an inner liner, containing a butyl-based rubber as a rubber component, has been increasingly important from the viewpoint of retaining air pressure, maintaining low energy consumption, preventing degradation of a steel cord plated layer and a coating rubber inside tires, and ensuring the safety. For these reasons, rubber compositions with excellent air permeation resistance and durability have been researched.

To improve tackiness of an unvulcanized rubber composition for an inner liner during a molding process of a tire (to prevent bonded parts from peeling off during and after molding and during vulcanization, i.e., to improve moldability), it is known that a compounded amount of process oil such as paraffin oil is increased. However, in such a case, there arises a problem that air barrier property of the obtained inner liner is insufficient.

To improve the air permeation resistance of the rubber composition for an inner liner, it is also known that the content of a butyl-based rubber in the rubber component is set at 100% by mass, and a mixed resin is added to the rubber composition instead of the paraffin oil, thereby improving the air permeation resistance. The mixed resin has lower tackiness than paraffin oil, and as a content of the mixed resin increases, a glass-transition temperature Tg of the rubber composition becomes higher, whereby the crack resistance, particularly, low-temperature crack resistance of the rubber composition tends to deteriorate.

Meanwhile, Tg of the rubber composition for the inner liner is desirably -35°C or lower. However, if this is difficult to achieve, lowering a complex elastic modulus (E*) at a low temperature can prevent occurrence of cracks beforehand. Patent Document 1 describes a tire having an inner liner composed of a rubber composition for an inner liner that contains specific resins, including a mixed resin, in which the rubber composition for the inner liner is adjusted to contain 30 to 46 parts by mass of a specific reinforcing filler based on 100 parts by mass of a rubber component, thereby lowering the low-temperature E*, thus preventing the occurrence of cracks beforehand. However, this document fails to consider that the rubber composition contains a predetermined terpene-based resin.

Further, Patent Document 2 describes a rubber composition for an inner liner contain mica with a predetermined aspect ratio, thereby improving air retention properties. However, there is room for improvement of the crack resistance and durability.

Patent Document 3 describes rubber compositions for gas barrier layers comprising one or more optionally halogenated elastomers and a terpene-based resin having a glass transition temperature of 50 °C or more.

Meanwhile, a bladder for vulcanization of a tire is a rubber product that is inserted into an unvulcanized tire, pressurized with steam, nitrogen gas or the like injected into the inside of the bladder and subjected to heating from an inner surface of the tire, thereby vulcanizing the tire. The bladder for vulcanization of a tire is repeatedly utilized for vulcanization under pressurizing and heating conditions. For this reason, the bladder is made using a crosslinkable resin with excellent heat resistance. The bladder for vulcanization of a tire is also required to have adequate air permeation resistance and durability, like the inner liner.

PRIOR ART DOCUMENT

Patent Document

    Patent Document 1: JP 2015-038183 A
    Patent Document 2: JP 2006-328193 A
    Patent Document 3: WO 2006-047509 A2

SUMMARY OF THE INVENTION

PROBLEM TO BE SOLVED BY THE INVENTION

It is an object of the present invention to provide a rubber composition that is excellent in air permeation resistance, moldability, and durability, a pneumatic tire having an inner liner composed of the rubber composition, and a bladder for vulcanization composed of the rubber composition.

## MEANS TO SOLVE THE PROBLEM

The present invention relates to a rubber composition comprising a rubber component comprising 70% by mass or more in total of at least one selected from the group consisting of a butyl rubber and a halogenated butyl rubber, a terpene-based resin having a glass-transition temperature of 60°C or lower and 6 to 30 parts by mass in total of a non-terpene resin, other than the terpene-based resin having the glass-transition temperature of 60°C or lower, based on 100 parts by mass of the rubber component, the non-terpene resin having a glass-transition temperature of 50°C or higher, wherein the air permeability coefficient of the rubber composition calculated from the air permeation amount is $4.6 \times 10^{-11}$ cm$^3$·cm/(cm$^2$·s·Pa) or less,
where the air permeation amount is an air permeation amount measured in accordance with a gas permeability test method using a gas chromatographic method, described in JIS K7126-1: 2006.

It is preferable that the terpene-based resin having the glass-transition temperature of 60°C or lower is hydrogenated.

It is preferable that the rubber composition comprises carbon black.

It is preferable that the rubber composition comprises aluminum hydroxide.

Further, the present invention relates to a pneumatic tire having an inner liner composed of the above-mentioned rubber composition and a bladder for vulcanization composed of the above-mentioned rubber composition.

## EFFECTS OF THE INVENTION

According to the rubber composition of the present invention comprising the rubber component and the terpene-based resin having a glass-transition temperature of 60°C or lower and exhibiting a predetermined air barrier property index, the rubber composition excellent in air permeation resistance, moldability, and durability can be provided.

## DETAILED DESCRIPTION

The rubber composition of the present disclosure is a rubber composition comprising a rubber component and a terpene-based resin having a glass-transition temperature of 60°C or lower and exhibiting a predetermined air barrier property index.

### <Rubber component>

Examples of the rubber component used in the present disclosure include diene-based rubbers such as isoprene-based rubbers, butadiene rubber (BR), styrene butadiene rubber (SBR), styrene isoprene butadiene rubber (SIBR), chloroprene rubber (CR) and acrylonitrile butadiene rubber (NBR); and butyl-based rubbers. These rubber components may be used alone or in combination. Among these, the butyl-based rubbers are preferably contained because of its excellent air permeation resistance and heat resistance.

Examples of the butyl-based rubber include halogenated butyl rubber (X-IIR), butyl rubber (IIR), a brominated isobutylene-p-methylstyrene copolymer (trade name: Exxpro 3035, manufactured by Exxon Mobil Chemical Co.) and the like. The butyl rubber (IIR) refers to a non-halogenated butyl rubber or a reclaimed butyl-based rubber, which is known as a so called regular butyl rubber. Examples of IIR which can be suitably used include those commonly used in the tire industry.

The halogenated butyl rubber (X-IIR) is one formed by introducing halogen into molecules of a regular butyl rubber. Examples of the usable halogenated butyl rubber include brominated butyl rubber (Br-IIR), chlorinated butyl rubber (Cl-IIR) and the like. Among these, Br-IIR is preferable because sulfur crosslinking tends to proceed even without containing natural rubber.

When the rubber component contains at least one selected from the group consisting of IIR and X-IIR, the total content thereof is preferably 70% by mass or more, more preferably 81% by mass or more, further preferably 100% by mass based on 100% by mass of the rubber component because of excellent air permeation resistance. Meanwhile, when compounding IIR and CR, the content of IIR is preferably 90 to 98% by mass, more preferably 94 to 97% by mass based on 100% by mass of the rubber component because an appropriate crosslinking density can be ensured.

Examples of the isoprene-based rubber include isoprene rubber (IR), natural rubber (NR), modified natural rubber and the like. Examples of NR include deproteinized natural rubber (DPNR) and high-purity natural rubber (HPNR). Examples of the modified natural rubber include epoxidized natural rubber (ENR), hydrogenated natural rubber (HNR), grafted natural rubber and the like. In addition, NRs commonly used in the tire industry, for example, SIR20, RSS#3, and TSR20 can be used.

When the rubber component contains NR, the content thereof is preferably 5 to 30% by mass, more preferably 10 to 19% by mass based on 100% by mass of the rubber component from the viewpoint of low energy consumption, moldability and air permeation resistance.

<Terpene-based resin having a glass-transition temperature of 60°C or lower>

The rubber composition of the present disclosure is characterized by containing a terpene-based resin that has a glass-transition temperature (Tg) of 60°C or lower. The terpene-based resin having the Tg of 60°C or lower is excellent in compatibility with butyl-based rubbers. By compounding the terpene-based resin having the Tg of 60°C or lower, the rubber composition can be excellent in durability and air permeation resistance.

Examples of the terpene-based resin having the Tg of 60°C or lower according to the present disclosure include a terpene-based resin including a polyterpene resin composed of at least one selected from terpene raw materials, such as $\alpha$-pinene, $\beta$-pinene, limonene and dipentene; an aromatic modified terpene resin prepared from a terpene compound and an aromatic compound as raw materials; a terpene phenol resin prepared from a terpene compound and a phenol-based compound as raw materials; and the like. Here, examples of the aromatic compound which is the raw material of the aromatic modified terpene resin include styrene, $\alpha$-methylstyrene, vinyltoluene, divinyltoluene and the like. Examples of the phenol-based compound which is the raw material of the terpene phenol resin include phenol, bisphenol A, cresol, xylenol and the like.

The glass-transition temperature (Tg) of the terpene-based resin having a Tg of 60°C or lower is 60°C or lower, preferably 50°C or lower in order to prevent deterioration of the crack resistance, especially, the low-temperature crack resistance, due to a high glass-transition temperature of the rubber composition. The lower limit of the glass-transition temperature of the terpene-based resin is not particularly limited, but is preferably 5°C or higher, because this terpene-based resin can have a weight-average molecular weight (Mw) equal to or higher than that of oil and can secure less volatile property. The weight-average molecular weight of the hydrogenated terpene-based resin is preferably 200 or more from the viewpoint of lowering volatility at a high temperature than that of a process oil. The weight-average molecular weight of the terpene-based resin is more preferably 400 or more from the viewpoint of maintaining flexibility of the rubber product in use.

The terpene-based resin having the Tg of 60°C or lower is preferably a hydrogenated terpene-based resin. That is, the terpene-based resin having the Tg of 60°C or lower and subjected to hydrogenation is preferable. Furthermore, hydrogenating the terpene-based resin lowers a solubility parameter (SP) value thereof, which improves the compatibility, particularly, with a butyl-based rubber or the like which has a lower SP value, compared to other rubber components. The hydrogenation treatment to the terpene-based resin can be performed by any known method, and in the present disclosure, a commercially available hydrogenated terpene-based resin can also be used.

The softening point of the terpene-based resin having the Tg of 60°C or lower is usually 100°C or lower, although it depends on the contents of impurities and structures other than the terpene structure. When the softening point is 100°C or lower, the terpene-based resin takes a hydrogenated terpene structure, and the mobility of the structure increases. Thus, the compatibility of the terpene-based resin with the butyl-based rubber is less likely to be improved even if the SP value decreases. It should be noted that the softening point of the resin in the present disclosure was measured by using a flow tester (trade name: CFT-500D, manufactured by SHIMADZU CORPORATION). Specifically, 1 g of resin as a sample was heated at a temperature elevating rate of 6°C/min, while applying a load of 1.96 MPa onto the sample by a plunger. The sample was then extruded from a nozzle with a diameter of 1 mm and a length of 1 mm, followed by plotting a descent amount of the plunger in the flow tester with respect to the temperature. Finally, the softening point of the resin was defined as the temperature at which the half of the sample has flowed out.

The SP value of the terpene-based resin having the Tg of 60°C or lower is preferably close to an SP value of butyl-based rubber, i.e., 7.7 to 8.1, and is preferably 8.60 or less, more preferably 8.50 or less. It should be noted that the term "SP value" as used herein means a solubility parameter calculated by the Hoy method based on the structure of a compound. The Hoy method is a calculation method described in, for example, K. L. Hoy "Table of Solubility Parameters", Solvent and Coatings Materials Research and Development Department, Union Carbites Corp. (1985).

The content of the terpene-based resin having the Tg of 60°C or lower is preferably 2 parts by mass or more, more preferably 3 parts by mass or more based on 100 parts by mass of the rubber component, because the effects of the present disclosure can be adequately obtained. The content of the terpene-based resin having the Tg of 60°C or lower is preferably 40 parts by mass or less, more preferably 30 parts by mass or less from the viewpoint of rupture strength, Hs, moldability, and durability.

<Other compounding agents>

In addition to the above components, compounding agents commonly used in the manufacture of rubber compositions can be appropriately compounded in the rubber composition according to the present disclosure. Examples of the compounding agent include carbon black, silica, other inorganic fillers, any resin component other than the terpene-based resin having the Tg of 60°C or lower, oil, zinc oxide, stearic acid, an antioxidant, a wax, a vulcanizing agent, a vulcanization accelerator and the like.

The carbon black is not particularly limited, and examples thereof include SAF, ISAF, HAF, FF, FEF, GPF, SRF-LM and the like, which are commonly used in the tire industry.

Among these, a large-particle size carbon black having a nitrogen adsorption specific surface area ($N_2SA$) of 40 $m^2/g$ or less is preferable because of its excellent air permeation resistance and durability. The lower limit of $N_2SA$ of the large-particle size carbon black is not particularly limited, but is preferably 20 $m^2/g$ or more. Specific examples of the large-particle size carbon black include Shoblack N762 ($N_2SA$: 29 $m^2/g$) manufactured by Cabot Japan KK, StatexN660 ($N_2SA$: 35 $m^2/g$) manufactured by Jiangix Black Cat Carbon Black Inc., Shoblack N660 ($N_2SA$: 35 $m^2/g$) manufactured by Cabot Japan KK and the like. These carbon blacks can be used alone or in combination. It should be noted that the nitrogen adsorption specific surface area of carbon black is a value measured by the BET method according to ASTMD3037-81.

When making the bladder for vulcanization of a tire composed of the rubber composition of the present disclosure, the rubber composition is required to have excellent durability, rather than the air permeation resistance, by improving rubber strength using carbon black. From this viewpoint, it is preferable to use carbon black having a nitrogen adsorption specific surface area ($N_2SA$) of 40 to 200 $m^2/g$.

When carbon black is contained, the content thereof is preferably 20 parts by mass or more, more preferably 25 parts by mass or more based on 100 parts by mass of the rubber component because a reinforcing effect can be obtained adequately due to compounding of carbon black. The content of carbon black is preferably 70 parts by mass or less, more preferably 65 parts by mass or less in order to ensure the reinforcing effect.

Any silica that is commonly used in the tire industry may be compounded as the above-mentioned silica. However, since a silane coupling agent is to be compounded with the silica, the cost of the rubber composition becomes higher. Further, silica not covered with the silane coupling agent reaggregates while fabricating an extruded sheet, thus deteriorating sheet processability. This is why silica is preferably not used.

Examples of the above-mentioned other inorganic fillers include talc, mica, aluminum hydroxide and the like. Among these, a flat inorganic filler is preferable because of its excellent air permeation resistance, and further, flat aluminum hydroxide is preferable because of its excellent moldability.

Flat aluminum hydroxide industrially produced from bauxite and having a flattening ratio of 5 to 30 and an average particle size of 1.0 $\mu$m or less is preferable as the above-mentioned flat aluminum hydroxide because of its excellent air permeation resistance and tackiness at molding.

An average particle size of the flat aluminum hydroxide is preferably 1.0 $\mu$m or less, more preferably 0.9 $\mu$m or less. The lower limit of the average particle size is not particularly limited. It should be noted that the average particle size of aluminum hydroxide is a value of d50 obtained from a cumulative curve of secondary aggregation distribution measurement.

A flattening ratio of the flat aluminum hydroxide is preferably 5 to 30, more preferably 10 to 30. It should be noted that the flattening ratio of aluminum hydroxide is a value determined by analysis from SEM images.

A nitrogen adsorption specific surface area ($N_2SA$) of the flat aluminum hydroxide is preferably 3 to 100 $m^2/g$, more preferably 10 to 60 $m^2/g$ because such aluminum hydroxide particles are difficult to reaggregate and even a single particle thereof is less likely to become a fracture nucleus. It should be noted that the nitrogen adsorption specific surface area of aluminum hydroxide is a value measured by the BET method according to ASTMD3037-81.

Further, a Mohs hardness of the flat aluminum hydroxide is preferably 3 or less because an equipment wear is a little. It should be noted that the Mohs hardness is one of mechanical properties of materials and determined by a measurement method widely used in the field of minerals since a long time ago. This method involves scratching a target material by using the following ten kinds of minerals sequentially in the order number to produce a scratch thereon and finding that if one mineral can scratch the material, the material has a lower hardness than the mineral. The following minerals in ascending order of hardness are used: 1: talc (talcum), 2: gypsum, 3: calcite, 4: fluorite, 5: apatite, 6: common feldspar, 7: crystal, 8: topaz, 9: corundum, and 10: diamond.

In the rubber composition of the present disclosure, in addition to the terpene-based resin having the Tg of 60°C or lower, a resin other than "the terpene-based resin having the Tg of 60°C or lower" is compounded. From the viewpoint of moldability and air permeation resistance, the rubber composition contains a resin (non-terpene-based resin) having a Tg of 50°C or higher, other than the terpene-based resin. It should be noted that herein, the softening point refers to a temperature at which the resin begins to deform. In the present disclosure, the softening point is a value measured by using an automatic softening point tester in conformity with a softening point tester described in the softening point test method of JIS K2207 according to a softening point measurement method described in JIS K5902.

Examples of the non-terpene-based resin having the Tg of 50°C or higher include a mixed resin, a non-reactive alkylphenol resin, a C5-based petroleum resin, and a coumarone indene resin, each of which has a Tg of 50°C or higher. Among these, the mixed resin is preferably contained because of its excellent air barrier property and moldability. The non-reactive alkylphenol resin is preferably contained because of its excellent moldability (tackiness).

The mixed resin refers to a copolymer of two or more kinds of monomers. By compounding the mixed resin into the rubber composition to fill voids between the reinforcing material such as carbon and polymer, it is possible to improve the air barrier property. Examples of the monomer used in the mixed resin include aromatic hydrocarbon monomers such as phenolic adhesive monomers, coumarone and indene, and aliphatic hydrocarbon monomers such as C5, C8 and C9 and the like, and among these, two or more kinds of monomers can be selected and copolymerized to be used. Among these, an aromatic monomer and an aliphatic monomer are preferably contained, a combination of an aromatic hydrocarbon monomer and an aliphatic hydrocarbon monomer is more preferable, and a combination of a high molecular aromatic hydrocarbon monomer and an aliphatic hydrocarbon monomer is further preferable.

Specific examples of the mixed resin include STRUKTOL 40MS manufactured by Struktol Company of America, LLC, Rhenosin 145A manufactured by Rhein Chemie Corp., Promix 400 manufactured by Flow Polymers Inc. and the like.

When the mixed resin is compounded, the content of the mixed resin is preferably 3 parts by mass or more, more preferably 5 parts by mass or more based on 100 parts by mass of the rubber component. When the content of the mixed resin is less than 3 parts by mass, there is a tendency that the effect resulting from the compounding of the mixed resin is difficult to obtain. The content of the mixed resin is preferably 20 parts by mass or less, more preferably 15 parts by mass or less. When the content of the mixed resin exceeds 20 parts by mass, the air permeation resistance becomes saturated, while the crack resistance of the rubber composition, particularly low temperature crack resistance thereof, tends to decrease.

The non-reactive alkylphenol resin refers to one having an alkyl chain in the ortho- and para-positions (particularly para-position) of a hydroxyl group of a benzene ring in a chain and contributing a little to the crosslinking reaction upon vulcanization. The non-reactive alkylphenol resin is a resin compounded separately from the mixed resin. Specific examples of the non-reactive alkylphenol resin include TH110 manufactured by Struktol Company of America, LLC, SP1068 resin manufactured by Schenectady International, Inc. and the like. These non-reactive alkylphenol resins may be used alone or in combination.

The C5-based petroleum resin is a resin compounded separately from the mixed resin, and a specific example thereof includes MARUKAREZ T-100AS (trade name) manufactured by Maruzen Petrochemical Co., Ltd. and the like. Further, the coumarone indene resin is a resin containing coumarone and indene and is a resin compounded separately from the mixed resin, and specific examples thereof include Nitto Resin Coumarone G-90 (softening point: 90°C) manufactured by Nitto Chemical Co., Ltd., NOVARES C10 (softening point: 10°C) manufactured by Rutgers Chemicals and the like. Although these resin components generally tend to be inferior to the non-reactive alkylphenol in tackiness, they are excellent in fuel efficiency.

When the rubber composition contains at least one kind of resin selected from the group consisting of a non-reactive alkylphenol resin, a C5-based petroleum resin, and a coumarone indene resin, the content thereof (if used in combination, the total compounded amount thereof) is preferably 0.2 to 3 parts by mass based on 100 parts by mass of the rubber component from the viewpoint of improving moldability and preventing deterioration of air permeation resistance. However, it is more preferable that such resin is not contained.

The rubber composition contains the non-terpene-based resin having the Tg of 50°C or higher, the content of this resin component (if used in combination, the total compounded amount thereof) is 6 to 30 parts by mass, preferably 8 to 30 parts by mass based on 100 parts by mass of the rubber component from the viewpoint of ensuring the crack resistance while maximizing the air permeation resistance.

The oil is not particularly limited, and examples thereof include paraffin oils such as process oil and mineral oil, TDAE oil and the like, commonly used in the tire industry. When making a bladder for vulcanization of a tire composed of the rubber composition of the present disclosure, castor oil or the like can be used.

Oil containing a large amount of paraffin components such as process oil or mineral oil is excellent in compatibility with the butyl-based rubber and also excellent in moldability such as sheet processability, but tends to deteriorate air permeation resistance. Thus, the content of oil is preferably 3 parts by mass or less based on 100 parts by mass of the rubber component, and more preferably the oil is not contained. On the other hand, TDAE oil is not compatible with the butyl rubber, and thereby the oil bleeds excessively at the surface of the rubber composition. Consequently, tackiness tends to deteriorate, and hence it is preferable not to contain the oil.

<Rubber composition and tire>

The rubber composition according to the present disclosure can be produced by a general method. For example, the rubber composition can be produced by kneading, among the above-mentioned respective components, components other than a crosslinking agent and a vulcanization accelerator into a mixture by a known kneading machine, which is used in a common rubber industry, such as a Banbury mixer, a kneader, or an open roll, and then, adding the crosslinking agent and the vulcanization accelerator to this mixture, followed by further kneading, and then vulcanizing.

The rubber composition according to the present disclosure is characterized by exhibiting the following air permeability coefficient and/or air barrier property index.

The air permeability coefficient is one calculated from the air permeation amount measured in accordance with a gas permeability test method using the gas chromatographic method, described in JIS K7126-1: 2006. The air permeation amount can be determined by measuring a gas permeation amount of each of nitrogen gas ($N_2$) and oxygen gas ($O_2$) at 20°C using the gas permeability measuring device (for example, trade name: GTR-11A/31A manufactured by GTR Tec Corporation or the like) and then calculating the permeation amount of air ($N_2:O_2 = 80:20$) from the measurement result.

The air permeability coefficient of the rubber composition according to the present disclosure is preferably $5.1 \times 10^{-11}$ cm$^3$·cm/(cm$^2$·s·Pa) or less, more preferably $4.6 \times 10^{-11}$ cm$^3$·cm/(cm$^2$·s·Pa) or less from the viewpoint of exhibiting excellent air permeation resistance as the rubber composition for an inner liner or the rubber composition for a bladder. The lower limit of the air permeability coefficient is not particularly limited, and the lower, the better.

The air barrier property index is an index calculated by the following formula (1) after measuring the air permeation amount according to JIS K7126-1: 2006. It shows that the larger the air barrier property index is, the smaller the air permeation amount of the vulcanized rubber composition is, and the more excellent the air barrier property is. It should be noted that in the formula (1), the term "Comparative Example 1" is Comparative Example 1 described in Table 1 to be described later, and the term "the Rubber Composition" is the rubber composition according to the present disclosure.

$$\text{Formula (1): (Air Barrier Property Index)} = \text{(Air Permeation Amount of a Rubber Composition in Comparative Example 1)}/\text{(Air Permeation Amount of the Rubber Composition)} \times 100$$

The air barrier property index in the formula (1) of the rubber composition according to the present disclosure is preferably 110 or more, more preferably 120 or more from the viewpoint of exhibiting excellent air permeation resistance as the rubber composition for an inner liner or the rubber composition for a bladder. The upper limit of the air barrier property index is not particularly limited, and the higher the value of the index is, the better it is.

The tire of the present disclosure can be produced by a normal method using the above rubber composition. That is, the rubber composition is extruded into the shape of the inner liner, formed in a tire building machine by a normal method, and laminated with other tire members to form an unvulcanized tire. The unvulcanized tire is heated and pressurized in a vulcanizer, so that the tire of the present disclosure can be produced. Further, the bladder for vulcanization of a tire of the present disclosure can be produced by a normal method using the rubber composition.

EXAMPLE

Hereinafter, the present disclosure will be described in detail based on Examples, but the present disclosure is not to be construed as limited only thereto.

A variety of chemicals used in Examples and Comparative Examples will be described.
Br-IIR: Bromobutyl rubber 2255 manufactured by Exxon Mobil Chemical Co. (SP value: 7.8, Tg:-71)
NR: TSR20 from Malaysia (SP value: 8.05, Tg: -74)

Carbon black 1: ShoBlack N660 ($N_2$SA: 35 m$^2$/g) manufactured by Cabot Japan K.K.
Carbon black 2: ShoBlack N762 ($N_2$SA: 29 m$^2$/g) manufactured by Cabot Japan K.K.

Aluminum hydroxide 1: Ath#B (average particle size: 0.6 $\mu$m, flattening ratio: 15, $N_2$SA: 15 m$^2$/g, Mohs hardness: 3) manufactured by Sumitomo Chemical Co., Ltd.
Aluminum hydroxide 2: Ath#E (average particle size: 0.3 $\mu$m, flattening ratio: 25, $N_2$SA: 33 m$^2$/g, Mohs hardness: 3) manufactured by Sumitomo Chemical Co., Ltd.
Aluminum hydroxide 3: C301N (average particle size: 1.0 $\mu$m, flattening ratio: 10, $N_2$SA: 4 m$^2$/g, Mohs hardness: 3) manufactured by Sumitomo Chemical Co., Ltd.
Aluminum hydroxide 4: C302N (average particle size: 2.5 $\mu$m, flattening ratio: 5, $N_2$SA: 2 m$^2$/g, Mohs hardness: 3) manufactured by Sumitomo Chemical Co., Ltd.

Process oil: Diana Process PA32 (paraffin component: 67% by mass, naphthenic component: 28% by mass, aromatic component: 5% by mass, SP value: 7.8, Tg: -66) manufactured by Idemitsu Kosan Co., Ltd.
C5-based petroleum resin: MARUKAREZ T-100AS (SP value: 8.5, softening point: 102°C, Tg: 62) manufactured by Maruzen Petrochemical Co., Ltd.
Alkylphenol resin: SP1068 resin (SP value: 11, softening point: 94°C, Tg: 60, weight-average molecular weight (Mw): 2225, number-average molecular weight (Mn): 1053) manufactured by Schenectady International, Inc.

Non-hydrogenated polyterpene 1: PX1150N (SP value: 8.42, softening point: 115°C, Tg: 62) manufactured by Yasuhara Chemical Co., Ltd.
Non-hydrogenated polyterpene 2: PX800 (SP value: 8.42, softening point: 80°C, Tg: 42) manufactured by Yasuhara Chemical Co., Ltd.
Non-hydrogenated polyterpene 3: Daimaron (SP value: 8.42, liquid) manufactured by Yasuhara Chemical Co., Ltd.
Non-hydrogenated aromatic terpene: TO85 (SP value: 8.73, softening point: 85°C, Tg: 41) manufactured by Yasuhara Chemical Co., Ltd.

AMS resin: SA85 (SP value: 9.1, softening point: 85°C, Tg: 43) manufactured by Arizona Chemical Company, LLC.
Mixed resin: 40MS (terpolymer composed of ethylene, propylene and styrene, SP value: 8.9, softening point: 101°C, Tg: 58°C) manufactured by Struktol Company of America, LLC.

Hydrogenated polyterpene 1: P85 (SP value: 8.36, softening point: 85°C, Tg: 43) manufactured by Yasuhara Chemical Co., Ltd.
Hydrogenated polyterpene 2: P105 (SP value: 8.36, softening point: 105°C, Tg: 55) manufactured by Yasuhara Chemical Co., Ltd.
Hydrogenated polyterpene 3: P125 (SP value: 8.36, softening point: 125°C, Tg: 67) manufactured by Yasuhara Chemical Co., Ltd.
Hydrogenated polyterpene 4: P150 (SP value: 8.36, softening point: 150°C, Tg: 90) manufactured by Yasuhara Chemical Co., Ltd.

Hydrogenated aromatic terpene 1: M105 (SP value: 8.52, softening point: 105°C, Tg: 55) manufactured by Yasuhara Chemical Co., Ltd.
Hydrogenated aromatic terpene 2: M125 (SP value: 8.52, softening point: 125°C, Tg: 65) manufactured by Yasuhara Chemical Co., Ltd.

Zinc oxide: Zinc oxide #2 manufactured by Mitsui Mining & Smelting Co., Ltd.
Stearic acid: Stearic acid Tsubaki manufactured by NOF

CORPORATION

Antioxidant: Nocrack 224 (2,2,4-trimethyl-1,2-dihydroquinoline polymer) manufactured by Ouchi Shinko Chemical Industrial Co., Ltd.
Sulfur: HK-200-5 (oil content of 5% by mass) manufactured by Hosoi Chemical Industry Co., Ltd.
Vulcanization accelerator: Nocceler DM (di-2-benzothiazyldisulfide) manufactured by Ouchi Shinko Chemical Industrial Co., Ltd.

Examples and Comparative Examples

According to the compounding formulations shown in Tables 1 to 3, all chemicals, other than sulfur and a vulcanization accelerator, in the compounding materials were kneaded for five minutes using a 1.7 L Banbury mixer until the temperature reached the discharge temperature of 160°C to obtain a kneaded product. Then, the sulfur and the vulcanization accelerator were added to the obtained kneaded product and sequentially kneaded for four minutes with a biaxial open roll until the temperature thereof became 95°C to obtain an unvulcanized rubber composition. The obtained unvulcanized rubber composition was extruded into a predetermined shape and press-vulcanized at 170°C for 12 minutes to obtain a vulcanized rubber composition. It should be noted that rubber test pieces were prepared using the unvulcanized rubber compositions and the vulcanized rubber compositions depending on the purposes of tests below, and the prepared test pieces were then evaluated in these tests.

Moldability test

The following "tackiness test" and "sheet flatness test" were performed on each test piece, and the overall evaluation of each test result was compared with the evaluation of Comparative Example 1 and is indicated by an index, assuming that the result of Comparative Example 1 is 100. It shows that the larger the index is, the more excellent the moldability is. In the present disclosure, the targeted value of performance of moldability (index) is 90 or more.

"Tackiness test"

The unvulcanized rubber composition was extruded into a sheet having a thickness of 1 mm using rolls. The adhesion (tackiness) of the obtained rubber sheet between a metal plate sensor and the rubber sheet was measured by using a tack tester (trade name: "TAC TESTER II" manufactured by Toyo Seiki Seisakusho Co., Ltd.).

"Sheet flatness test"

The unvulcanized rubber composition was extruded into a sheet having a thickness of 2 mm using rolls, and the flatness of the obtained rubber sheet was observed visually.

Durability test

A No. 3 dumbbell test piece was prepared from each vulcanized rubber composition and subjected to a tensile test according to JIS-K6251. An elongation at break (EB) of the test piece was measured and expressed as an index with a value of Comparative Example 1 set at 100. It shows that the higher the index is, the higher the rubber strength is and the more excellent the durability is.

Air barrier property test

An air permeation amount of each vulcanized rubber composition at 20°C was measured using a gas permeability measuring device (trade name: GTR-11A/31A manufactured by GTR TEC Corporation) according to JIS K7126-1: 2006. Then, an air permeability coefficient was calculated from the measured air permeation amount. It shows that the smaller the air permeability coefficient is, the smaller the air permeation amount of the vulcanized rubber composition is and the more excellent the air barrier property is. The air permeation amount of each composition is expressed as an index by the formula below. It shows that the larger the air barrier property index is, the smaller the air permeation amount of the vulcanized rubber composition is and the more excellent the air barrier property is. In the present disclosure, the targeted value of performance of an air barrier property (index) is 110 or more.

$$\text{(Air Barrier Property Index)} = \text{(Air Permeation Amount of a Rubber Composition in Comparative Example 1)}/\text{(Air Permeation Amount of Each Composition)} \times 100$$

Table 1

|  | Example | | | | | | | | | |
|---|---|---|---|---|---|---|---|---|---|---|
|  | 1 | 2* | 3* | 4 | 5* | 6* | 7 | 8* | 9* | 10 |
| Compounding amount (part by mass) | | | | | | | | | | |
| Br-IIR | 100 | 100 | 100 | 100 | 100 | 100 | 100 | 100 | 100 | 100 |
| NR | - | - | - | - | - | - | - | - | - | - |
| Carbon black 1 | 55 | 55 | 55 | 55 | 55 | 55 | 55 | 55 | 55 | 55 |
| Carbon black 2 | - | - | - | - | - | - | - | - | - | - |
| Aluminum hydroxide 1 | - | - | - | - | - | - | - | - | - | - |
| Aluminum hydroxide 2 | - | - | - | - | - | - | - | - | - | - |
| Aluminum hydroxide 3 | - | - | - | - | - | - | - | - | - | - |
| Aluminum hydroxide 4 | - | - | - | - | - | - | - | - | - | - |
| Process oil | - | - | - | - | 5 | - | - | - | - | - |
| C5-based petroleum resin | - | - | - | - | - | - | - | - | - | - |
| Alkylphenol resin | 2 | 2 | 2 | - | 2 | 1 | 1 | 2 | 2 | 2 |

(continued)

| | Example | | | | | | | | | |
|---|---|---|---|---|---|---|---|---|---|---|
| | 1 | 2* | 3* | 4 | 5* | 6* | 7 | 8* | 9* | 10 |
| **Compounding amount (part by mass)** | | | | | | | | | | |
| Non-hydrogenated polyterpene 1 | - | - | - | - | - | - | - | - | - | - |
| Non-hydrogenated polyterpene 2 | - | - | - | - | - | - | - | - | 7 | - |
| Non-hydrogenated polyterpene 3 | - | - | - | - | - | - | - | - | - | 7 |
| Non-hydrogenated aromatic terpene | - | - | - | - | - | - | - | 7 | - | - |
| AMS resin | - | - | - | - | - | - | - | - | - | - |
| Mixed resin | 5 | 5 | 5 | 15 | 5 | - | 5 | 5 | 5 | 5 |
| Hydrogenated polyterpene 1 | 7 | - | - | 7 | 2 | 15 | 15 | - | - | - |
| Hydrogenated polyterpene 2 | - | 7 | - | - | - | - | - | - | - | - |
| Hydrogenated polyterpene 3 | - | - | - | - | - | - | - | - | - | - |
| Hydrogenated polyterpene 4 | - | - | - | - | - | - | - | - | - | - |
| Hydrogenated aromatic terpene 1 | - | - | 7 | - | - | - | - | - | - | - |
| Hydrogenated aromatic terpene 2 | - | - | - | - | - | - | - | - | - | - |

| | Example | | | | | | | | | |
|---|---|---|---|---|---|---|---|---|---|---|
| | 1 | 2* | 3* | 4 | 5* | 6* | 7 | 8* | 9* | 10 |
| **Compounding amount (part by mass)** | | | | | | | | | | |
| Zinc oxide | 1 | 1 | 1 | 1 | 1 | 1 | 1 | 1 | 1 | 1 |
| Stearic acid | 1 | 1 | 1 | 1 | 1 | 1 | 1 | 1 | 1 | 1 |
| Antioxidant | 1 | 1 | 1 | 1 | 1 | 1 | 1 | 1 | 1 | 1 |
| Sulfur (oil content of 5%) | 0.53 | 0.53 | 0.53 | 0.53 | 0.53 | 0.53 | 0.53 | 0.53 | 0.53 | 0.53 |
| Vulcanization accelerator | 1.25 | 1.25 | 1.25 | 1.25 | 1.25 | 1.25 | 1.25 | 1.25 | 1.25 | 1.25 |
| **Results of evaluation** | | | | | | | | | | |
| Moldability | 100 | 98 | 98 | 95 | 100 | 105 | 100 | 97 | 100 | 103 |
| Durability | 108 | 105 | 102 | 100 | 103 | 112 | 107 | 105 | 105 | 112 |
| Air permeability coefficient ($\times 10^{-11}$) | 4.2 | 4.8 | 5.2 | 3.9 | 5.1 | 4.6 | 4.1 | 5.4 | 5.2 | 4.2 |
| Air barrier property index | 135 | 120 | 110 | 145 | 111 | 125 | 139 | 128 | 130 | 135 |

* Examples 2, 3, 5, 6, 8 and 9 are not according to the invention.

Table 2

| | Example | | | | | | | |
|---|---|---|---|---|---|---|---|---|
| | 11* | 12 | 13 | 14 | 15 | 16 | 17 | 18 |
| **Compounding amount (part by mass)** | | | | | | | | |
| Br-IIR | 85 | 100 | 100 | 100 | 100 | 100 | 100 | 100 |
| NR | 15 | - | - | - | - | - | - | - |
| Carbon black 1 | 55 | - | 55 | 45 | 45 | 45 | 45 | 45 |
| Carbon black 2 | - | 70 | - | - | - | - | - | - |
| Aluminum hydroxide 1 | - | - | - | 20 | - | - | - | - |
| Aluminum hydroxide 2 | - | - | - | - | 20 | - | - | - |
| Aluminum hydroxide 3 | - | - | - | - | - | 20 | - | 20 |
| Aluminum hydroxide 4 | - | - | - | - | - | - | 20 | - |
| Process oil | - | - | - | - | - | - | - | - |
| C5-based petroleum resin | - | - | 2 | - | - | - | - | - |
| Alkylphenol resin | 1 | 2 | - | 2 | 2 | 2 | 2 | 2 |

(continued)

| | Example | | | | | | | |
|---|---|---|---|---|---|---|---|---|
| | 11* | 12 | 13 | 14 | 15 | 16 | 17 | 18 |
| Compounding amount (part by mass) | | | | | | | | |
| Non-hydrogenated polyterpene 1 | - | - | - | - | - | - | - | - |
| Non-hydrogenated polyterpene 2 | - | - | - | - | - | - | - | - |
| Non-hydrogenated polyterpene 3 | - | - | - | - | - | - | - | - |
| Non-hydrogenated aromatic terpene | - | - | - | - | - | - | - | 7 |
| AMS resin | - | - | - | - | - | - | - | - |
| Mixed resin | 5 | 5 | 5 | 5 | 5 | 5 | 5 | 5 |
| Hydrogenated polyterpene 1 | 7 | 7 | 10 | 7 | 7 | 7 | 7 | 7 |
| Hydrogenated polyterpene 2 | - | - | - | - | - | - | - | - |
| Hydrogenated polyterpene 3 | - | - | - | - | - | - | - | - |
| Hydrogenated polyterpene 4 | - | - | - | - | - | - | - | - |
| Hydrogenated aromatic terpene 1 | - | - | - | - | - | - | - | - |
| Hydrogenated aromatic terpene 2 | - | - | - | - | - | - | - | - |
| | 11* | 12 | 13 | 14 | 15 | 16 | 17 | 18 |
| Compounding amount (part by mass) | | | | | | | | |
| Zinc oxide | 1 | 1 | 1 | 1 | 1 | 1 | 1 | 1 |
| Stearic acid | 1 | 1 | 1 | 1 | 1 | 1 | 1 | 1 |
| Antioxidant | 1 | 1 | 1 | 1 | 1 | 1 | 1 | 1 |
| Sulfur (oil content of 5%) | 0.53 | 0.53 | 0.53 | 0.53 | 0.53 | 0.53 | 0.53 | 0.53 |
| Vulcanization accelerator | 1.25 | 1.25 | 1.25 | 1.25 | 1.25 | 1.25 | 1.25 | 1.25 |
| Results of evaluation | | | | | | | | |
| Moldability | 101 | 100 | 100 | 108 | 102 | 105 | 102 | 105 |
| Durability | 102 | 96 | 110 | 102 | 96 | 105 | 95 | 105 |
| Air permeability coefficient ($\times 10^{-11}$) | 5.0 | 4.0 | 3.9 | 4.0 | 3.9 | 4.1 | 4.2 | 4.0 |
| Air barrier property index | 113 | 143 | 145 | 142 | 145 | 139 | 137 | 142 |

\* Example 11 is not according to the invention.

Table 3

| | Comparative Example | | | | | | | | |
|---|---|---|---|---|---|---|---|---|---|
| | 1 | 2 | 3 | 4 | 5 | 6 | 7 | 8 | 9 |
| Compounding amount (part by mass) | | | | | | | | | |
| Br-IIR | 100 | 100 | 100 | 100 | 65 | 65 | 100 | 100 | 100 |
| NR | - | - | - | - | 35 | 35 | - | - | - |
| Carbon black 1 | 55 | 55 | 55 | 55 | 55 | 55 | 55 | 55 | 55 |
| Carbon black 2 | - | - | - | - | - | - | - | - | - |
| Aluminum hydroxide 1 | - | - | - | - | - | - | - | - | - |
| Aluminum hydroxide 2 | - | - | - | - | - | - | - | - | - |
| Aluminum hydroxide 3 | - | - | - | - | - | - | - | - | - |
| Aluminum hydroxide 4 | - | - | - | - | - | - | - | - | - |
| Process oil | 7 | - | - | - | - | - | 2 | 2 | 2 |
| C5-based petroleum resin | - | - | - | - | - | - | - | - | - |
| Alkylphenol resin | 2 | 5 | 2 | 2 | 2 | 2 | 2 | 2 | 2 |
| Non-hydrogenated polyterpene 1 | - | - | - | 7 | - | - | - | - | - |

(continued)

| | Comparative Example | | | | | | | | |
|---|---|---|---|---|---|---|---|---|---|
| | 1 | 2 | 3 | 4 | 5 | 6 | 7 | 8 | 9 |
| Compounding amount (part by mass) | | | | | | | | | |
| Non-hydrogenated polyterpene 2 | - | - | - | - | - | - | - | - | - |
| Non-hydrogenated polyterpene 3 | - | - | - | - | - | - | - | - | - |
| Non-hydrogenated aromatic terpene | - | - | - | - | - | - | - | - | - |
| AMS resin | - | - | 7 | - | - | - | - | - | - |
| Mixed resin | 5 | 5 | 5 | 5 | 5 | 10 | 5 | 5 | 5 |
| Hydrogenated polyterpene 1 | - | - | - | - | 7 | 7 | - | - | - |
| Hydrogenated polyterpene 2 | - | - | - | - | - | - | - | - | - |
| Hydrogenated polyterpene 3 | - | - | - | - | - | - | 7 | - | - |
| Hydrogenated polyterpene 4 | - | - | - | - | - | - | - | 7 | - |
| Hydrogenated aromatic terpene 1 | - | - | - | - | - | - | - | - | - |
| Hydrogenated aromatic terpene 2 | - | - | - | - | - | - | - | - | 7 |

| | Comparative Example | | | | | | | | |
|---|---|---|---|---|---|---|---|---|---|
| | 1 | 2 | 3 | 4 | 5 | 6 | 7 | 8 | 9 |
| Compounding amount (part by mass) | | | | | | | | | |
| Zinc oxide | 1 | 1 | 1 | 1 | 1 | 1 | 1 | 1 | 1 |
| Stearic acid | 1 | 1 | 1 | 1 | 1 | 1 | 1 | 1 | 1 |
| Antioxidant | 1 | 1 | 1 | 1 | 1 | 1 | 1 | 1 | 1 |
| Sulfur (oil content of 5%) | 0.53 | 0.53 | 0.53 | 0.53 | 0.53 | 0.53 | 0.53 | 0.53 | 0.53 |
| Vulcanization    accelerator | 1.25 | 1.25 | 1.25 | 1.25 | 1.25 | 1.25 | 1.25 | 1.25 | 1.25 |
| Results of evaluation | | | | | | | | | |
| Moldability | 100 | 100 | 75 | 102 | 110 | 107 | 95 | 96 | 95 |
| Durability | 100 | 95 | 80 | 105 | 110 | 111 | 102 | 98 | 97 |
| Air permeability coefficient ($\times 10^{-11}$) | 5.7 | 5.4 | 5.5 | 5.4 | 7.6 | 7.0 | 5.1 | 5.2 | 5.2 |
| Air barrier property index | 100 | 105 | 104 | 105 | 75 | 82 | 107 | 103 | 105 |

As it can be seen from the results of Tables 1 to 3, the rubber composition of the present disclosure is excellent in air permeation resistance, moldability, and durability.

**Claims**

1.    A rubber composition comprising: a rubber component comprising 70% by mass or more in total of at least one selected from the group consisting of a butyl rubber and a halogenated butyl rubber; a terpene-based resin having a glass-transition temperature of 60°C or lower;
and 6 to 30 parts by mass in total of a non-terpene resin, other than the terpene-based resin having the glass-transition temperature of 60°C or lower, based on 100 parts by mass of the rubber component, the non-terpene resin having a glass-transition temperature of 50°C or higher,
wherein the air permeability coefficient of the rubber composition calculated from the air permeation amount is 4.6 $\times 10^{-11}$ cm$^3$·cm/(cm$^2$·s·Pa) or less,
where the air permeation amount is an air permeation amount measured in accordance with a gas permeability test method using a gas chromatographic method, described in JIS K7126-1: 2006.

2.    The rubber composition of claim 1, wherein a total content of the at least one selected from the group consisting of the butyl rubber and the halogenated butyl rubber is 81% by mass or more based on 100 parts by mass of the rubber component.

3.    The rubber composition of claim 1 or 2,

wherein the terpene-based resin having the glass-transition temperature of 60°C or lower is hydrogenated.

4. The rubber composition of any one of claims 1 to 3, further comprising carbon black.

5. The rubber composition of any one of claims 1 to 4, further comprising aluminum hydroxide.

6. A pneumatic tire having an inner liner composed of the rubber composition of any one of claims 1 to 5.

7. A bladder for vulcanization of a tire composed of the rubber composition of any one of claims 1 to 5.


**Patentansprüche**

1. Kautschukzusammensetzung, welche umfasst: eine Kautschukkomponente, die insgesamt 70 Massenprozent oder mehr von mindestens einem umfasst, welcher aus der Gruppe bestehend aus einem Butylkautschuk und einem halogenierten Butylkautschuk ausgewählt ist; ein Terpen-basiertes Harz mit einer Glasübergangstemperatur von 60 °C oder niedriger; und, außer dem Terpen-basierten Harz mit der Glasübergangstemperatur von 60 °C oder niedriger, insgesamt 6 bis 30 Massenteile eines Nicht-Terpen-Harzes, bezogen auf 100 Massenteile der Kautschukkomponente, wobei das Nicht-Terpen-Harz eine Glasübergangstemperatur von 50 °C oder höher aufweist, wobei der aus der Permeationsmenge an Luft errechnete Luft-Permeabilitätskoeffizient der Kautschukzusammensetzung $4,6 \times 10^{-11}$ cm$^3$·cm/(cm$^2$·s·Pa) oder weniger beträgt, wobei die Permeationsmenge an Luft eine gemäß einem Gaspermeabilitäts-Prüfungsverfahren unter Verwendung eines gaschromatographischen Verfahrens gemessene Permeationsmenge an Luft ist, wie in JIS K7126-1: 2006 beschrieben.

2. Kautschukzusammensetzung nach Anspruch 1, wobei ein Gesamtgehalt des mindestens einen, welcher aus der Gruppe bestehend aus dem Butylkautschuk und dem halogenierten Butylkautschuk ausgewählt ist, 81 Massenprozent oder mehr beträgt, bezogen auf 100 Massenteile der Kautschukkomponente.

3. Kautschukzusammensetzung nach Anspruch 1 oder 2, wobei das Terpen-basierte Harz mit der Glasübergangstemperatur von 60 °C oder niedriger hydriert ist.

4. Kautschukzusammensetzung nach einem der Ansprüche 1 bis 3, welche zudem Ruß umfasst.

5. Kautschukzusammensetzung nach einem der Ansprüche 1 bis 4, welche zudem Aluminiumhydroxid umfasst.

6. Luftreifen, der einen aus der Kautschukzusammensetzung nach einem der Ansprüche 1 bis 5 bestehenden Innerliner aufweist.

7. Heizbalg, der aus der Kautschukzusammensetzung nach einem der Ansprüche 1 bis 5 besteht, zur Vulkanisation eines Reifens.


**Revendications**

1. Composition de caoutchouc comprenant un composant caoutchouc comprenant 70 % en masse ou plus au total d'au moins un produit sélectionné parmi le groupe comprenant un caoutchouc au butyle et un caoutchouc au butyle halogéné ; une résine à base de terpène ayant une température de transition vitreuse de 60° C ou moins ; et 6 à 30 parties en masse au total d'une résine sans terpène, autre que la résine à base de terpène ayant la température de transition vitreuse de 60°C ou moins, basée sur 100 parties en masse du composant caoutchouc, la résine sans terpène ayant une température de transition vitreuse de 50°C ou plus, dans laquelle le coefficient de perméabilité à l'air de la composition de caoutchouc calculé à partir de la quantité de perméation d'air est de $4,6 \times 10^{-11}$ cm$^3$·cm/(cm$^2$·s·Pa) ou moins, dans laquelle la quantité de perméation d'air est une quantité de perméation d'air mesurée en accord avec un procédé de test de perméabilité au gaz utilisant une méthode chromatographique au gaz, décrite dans la norme japonaise JIS K7126-1 : 2006.

2. Composition de caoutchouc selon la revendication 1,
dans laquelle une teneur totale dudit au moins un produit sélectionné parmi le groupe comprenant le caoutchouc au butyle et le caoutchouc au butyle halogéné est de 81 % en masse ou plus, basée sur 100 parties en masse du composant caoutchouc.

3. Composition de caoutchouc selon la revendication 1 ou 2,
dans laquelle la résine à base de terpène ayant la température de transition vitreuse de 60° C ou moins est hydrogénée.

4. Composition de caoutchouc selon l'une quelconque des revendications 1 à 3,
comprenant en outre du noir de carbone.

5. Composition de caoutchouc selon l'une quelconque des revendications 1 à 4,
comprenant en outre de l'hydroxyde d'aluminium.

6. Bandage pneumatique ayant un doublage intérieur composé de la composition de caoutchouc selon l'une quelconque des revendications 1 à 5.

7. Poche gonflable pour vulcanisation d'un pneumatique composée de la composition de caoutchouc selon l'une quelconque des revendications 1 à 5.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015038183 A
- JP 2006328193 A

- WO 2006047509 A2

**Non-patent literature cited in the description**

- Table of Solubility Parameters. **K. L. HOY.** Solvent and Coatings Materials Research and Development Department. Union Carbites Corp, 1985